(19) Europäisches Patentamt
European Patent Office
Office européen des brevets

(11) **EP 3 629 075 A1**

(12) **EUROPEAN PATENT APPLICATION**

(43) Date of publication:
**01.04.2020 Bulletin 2020/14**

(51) Int Cl.:
*G02B 27/22* (2018.01)          *H04N 13/302* (2018.01)
*G03B 21/28* (2006.01)          *H04N 13/388* (2018.01)

(21) Application number: **18196704.3**

(22) Date of filing: **25.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
• **MATTHEWS, Kim
  Warren, NJ New Jersey 07059 (US)**
• **HUANG, Gang
  Monroe Township, NJ New Jersey 08831 (US)**
• **JIANG, Hong
  Monroe Township, NJ New Jersey 08831 (US)**

(74) Representative: **Nokia EPO representatives
Nokia Technologies Oy
Karakaari 7
02610 Espoo (FI)**

(54) **APPARATUS ENABLING VISUAL REPRESENTATIONS OF A SCENE FROM MULTIPLE VIEWPOINTS**

(57)     An apparatus (1) comprising a plurality of optical deflectors (3) arranged about a curve (5) which at least partially encircles a volume (7). The optical deflectors (3) are configured to at least partially deflect incident light (9) away from the volume (7). The optical deflectors (3) have respective optical axes (131) which extend outwardly from the volume (7). The optical axes (131) have a component orthogonal (133) to a plane of the curve and a component parallel (135) to the plane. Nearest neighbouring optical deflectors (3) have respective optical axes (131) with differently directed orthogonal components (133) and with an angular separation between parallel components (135) of less than 90 degrees.

FIG. 4C

## Description

TECHNOLOGICAL FIELD

Embodiments of the present disclosure relate to apparatus enabling visual representations of a scene from multiple viewpoints.

BACKGROUND

Displays are known which are capable of rendering an object so that it can be viewed from multiple viewpoints.

Displays are known which are capable of rendering three-dimensional images to an unaided human eye.

BRIEF SUMMARY

According to some, but not necessarily all, examples of the disclosure there is provided an apparatus comprising a plurality of optical deflectors arranged about a curve which at least partially encircles a volume. The optical deflectors are configured to at least partially deflect incident light away from the volume. The optical deflectors have respective optical axes which extend outwardly from the volume. The optical axes have a component orthogonal to a plane of the curve and a component parallel to the plane. Nearest neighbouring optical deflectors have respective optical axes with differently directed orthogonal components and with an angular separation between parallel components of less than 90 degrees.

In some examples nearest neighbouring optical deflectors comprise a pair of optical deflectors comprising one optical deflector and the closest or next optical deflector in the encircling direction of the curve.

In some examples the curve is a plane, simple curve.

In some examples the curve forms a closed loop encircling the volume.

In some examples a portion of each of the plurality of optical deflectors lies in the plane.

In some examples the orthogonal displacement from the curve of the centres of the plurality of optical deflectors sum to zero.

In some examples the plurality of optical deflectors are configured to deflect incident light into different respective fields of projection.

In some examples the plurality of optical deflectors comprise one or more first optical deflectors and one or more second optical deflectors. The one or more first optical deflectors are configured to deflect incident light from a first direction, orthogonal to the plane, into a substantially radial direction. The one or more second optical deflectors are configured to deflect incident light from a second direction, opposite to the first direction, into a substantially radial direction.

In some examples the first and second optical deflectors are distributed, in an alternating arrangement, around the volume in the encircling direction of the curve.

In some examples the plurality of optical deflectors at least partially encircle a cylindrical volume and are regularly spaced every 45 degrees about the surface of the cylindrical volume.

In some examples the plurality of optical deflectors comprise a plurality of planar reflectors with respective surface normals parallel to the respective optical axes.

In some examples one or more displays are configured to illuminate respective optical deflectors with a visual representation of a scene from respective viewpoints.

In some examples the displays may be two-dimensional displays.

According to some, but not necessarily all, examples of the disclosure there is provided an apparatus comprising a plurality of optical deflectors and one or more volumetric displays. The plurality of optical deflectors are arranged about a curve which at least partially encircles a volume. The optical deflectors are configured to at least partially deflect incident light away from the volume. The one or more volumetric displays are configured to illuminate respective optical deflectors with a visual representation of a scene from respective viewpoints.

In some examples the one or more volumetric displays are formed by a stack of two-dimensional displays.

In some examples the two-dimensional displays in the stack are distributed along an axis which intersects a first one of the optical deflectors or which enables projection of light from each two-dimensional display onto at least the first one of the optical deflectors.

In some examples the two-dimensional displays are at least partially transmissive to light which illuminates their rear.

In some examples the visual representation of a scene from respective viewpoints is composed of a plurality of layers at different depths, the layers being displayed on the two-dimensional displays which correspond to their respective depths.

In some examples the two-dimensional displays comprise transparent OLED screens.

In some examples the optical deflectors have respective optical axes which extend outwardly from the volume. The optical axes have a component orthogonal to a plane of the curve and a component parallel to the plane. Nearest neighbouring optical deflectors have respective optical axes with differently directed orthogonal components and with an angular separation between parallel components of less than 90 degrees.

According to some, but not necessarily all, examples of the present disclosure there is provided examples as claimed in the appended claims.

BRIEF DESCRIPTION

Some example embodiments will now be described with reference to the accompanying drawings in which:

FIG. 1 shows an example of an apparatus described herein;
FIG. 2 shows an example of a controller described herein;
FIG. 3 shows another example of an apparatus described herein;
FIG. 4A-C show different representations of an example of another apparatus described herein;
FIG. 5 shows an example of an optical deflector described herein; and
FIG. 6 shows another example of an apparatus described herein.

DETAILED DESCRIPTION

The FIGS illustrate an apparatus 1 which provides visual representations of a scene from multiple viewpoints and also an apparatus 101 comprising an arrangement of optical deflectors which can, in some examples, enable the display of visual representations of a scene from multiple viewpoints.

In some examples the arrangement of optical deflectors forms multiple virtual images that are co-located in space at a position within a volume which the optical deflectors at least partially encircle.

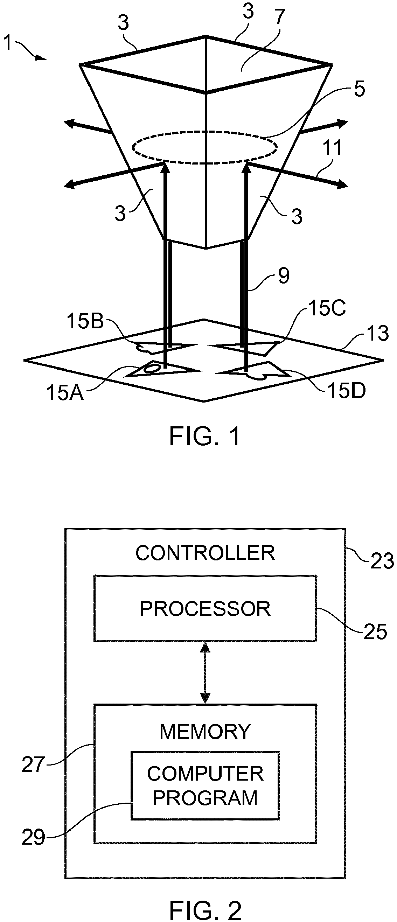

FIG. 1 illustrates an example of an apparatus 1 which comprises a plurality of optical deflectors 3 and one or more volumetric displays 13.

An optical deflector 3 is an optical element which has the function of deflecting incident light 9 from one direction into another direction. The deflected light 11 is projected into a different direction to the incident light 9 by the optical deflector 3. These optical elements can have reflective, refractive, and/or diffractive optical properties. The deflection of the incident light 9 can be by reflection, refraction, and/or diffraction. Examples of such optical deflectors 3 comprise, for example, reflective glass planes, mirrors, or holographic mirrors.

A volumetric display 13 is a display which forms a visual representation of a scene in three physical dimensions. Such a display can reproduce a scene in a manner which exhibits visual depth cues such as perspective that changes realistically with a change in the relative position of an observer. Such a display can reproduce a scene with a perspective that changes realistically with movement of the observer along the axis of the light which it projects or along such an axis when it is deflected by an optical deflector 3. In some examples a volumetric display 13 is autostereoscopic and renders three-dimensional images to an unaided human eye.

The plurality of optical deflectors 3 are arranged about a curve 5 which at least partially encircles a volume 7. The optical deflectors 3 are configured to at least partially deflect incident light 9 away from the volume 7. The one or more volumetric displays 13 are configured to illuminate respective optical deflectors 3 with a visual representation of a scene from respective viewpoints 15A-D. The one or more volumetric displays 13 are configured to project the visual representations of the scene from respective viewpoints 15A-D onto the respective optical deflectors 3.

Since the one or more volumetric displays 13 enable full-colour, non-static, three-dimensional visual representations of a scene to be rendered to an unaided human eye, the apparatus 1 can co-locate multiple full-colour, non-static, three-dimensional virtual images in a manner that provide a realistic multi-view experience to an observer.

In some examples, the apparatus 1 does not substantially comprise moving mechanical components and so is able to provide a realistic multi-view experience without being prone to mechanical failure.

In some examples a realistic multi-view experience which reproduces a scene may be provided by the apparatus 1 without requiring data for every voxel in the volume 7. Thus, lower bandwidth may be required.

In the example illustrated in FIG. 1 the optical deflectors 3 are, as a whole, angled to partially face respective one or more volumetric displays 13 and partially to face radially away from the encircled volume 7. This may not be true of all examples. For example, the optical deflectors 3 may instead comprise one or more portions which are angled to partially face respective one or more volumetric displays 13 and partially to face radially away from the encircled volume 7.

In the example illustrated in FIG. 1 the optical deflectors 3 have a trapezoidal shape. In other examples, the optical deflectors 3 can be triangular, rectangular, hexagonal, or ovoidal amongst other shapes. In some examples the plurality of optical deflectors 3 may comprise optical deflectors 3 of more than one shape.

In some examples the curve 5 can be a plane curve. In some examples the curve 5 can be simple curve. A simple curve does not cross itself and has no missing points. In some examples the curve 5 forms a closed loop which encircles the volume 7. In other examples the curve may only encircle part of the volume 7. The curve 5 can subtend an angle of less than 360 degrees such as, for example, 180 degrees.

In some examples a portion of each of the plurality of optical deflectors 3 lies on the curve 5. However, it is to be understood that the optical deflectors may not have any portion that lies on the curve 5. The optical deflectors 3 may be distributed about the curve 5, generally following the curve 5 but being disposed above or below the curve 5. In some examples the orthogonal displacement from the curve 5 of the centres of the plurality of optical deflectors 3 sum to zero. Orthogonal displacement from the curve 5 is determined with respect to a plane of the curve 5. In such examples where the curve is not a plane curve, the plane of the curve refers to a plane of best fit of the curve 5 such as, for example, a least squares plane.

In some examples the plurality of optical deflectors 3 are configured to deflect incident light 9 into different respective fields of projection. Each optical deflector 3 is responsible for an image field associated with a particular viewpoint.

In the example of FIG. 1 the plurality of optical deflectors 3 are arranged at 90 degree intervals about the volume 7 however it is to be appreciated that the interval between optical deflectors 3 may be less than or greater than 90 degrees and there may correspondingly be more or less than four viewpoints.

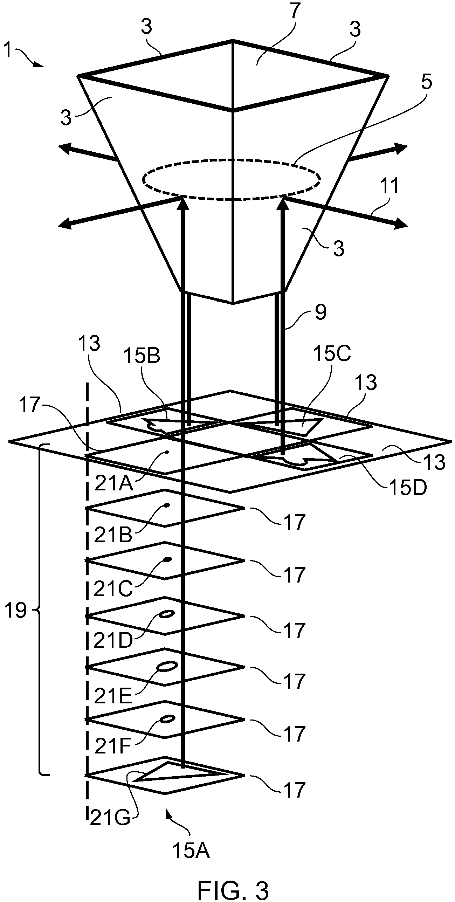

In the example of FIG. 1 all of the visual representations of a scene from a plurality of viewpoints 15A-D are rendered on a single volumetric display 13 however it is to be appreciated that more than one volumetric display 13 can be provided on which are rendered one or more of the visual representations. For example, in FIG. 3 each visual representation is rendered on a different volumetric display 13. It may be cheaper and more practical to use several smaller volumetric displays than one large volumetric display.

In some examples the position at which the visual representations of a scene from a plurality of viewpoints 15A-D are rendered on the one or more volumetric displays 13 can be controlled. For example, the rendering position can be translated towards or away from an edge of the volumetric display 13 which is furthest from the optical deflector 3 to cause the projected visual representation to appear higher or lower, thus facilitating viewing from multiple eye levels.

The position at which the visual representations of a scene from a plurality of viewpoints 15A-D are rendered on the one or more volumetric displays 13 can also be translated laterally with respect to the edge of the volumetric display 13 furthest from the optical deflector 3. For the avoidance of doubt, this lateral translation refers to translating the rendering position of the visual representation in a direction which is tangential to the encircling direction of the curve 5. In some examples this may reduce overlapping or double images when an observer moves around the volume between viewpoints 15A-D.

The position at which the visual representations of a scene from a plurality of viewpoints 15A-D are rendered on the one or more volumetric displays 13 can also be rotated (or if using one volumetric display 13 per visual representation, switched) so as to maintain a single viewpoint to an observer as the observer moves around the volume 7.

Such control of the position at which the visual representations of a scene from a plurality of viewpoints 15A-D are rendered on the one or more volumetric displays 13 can be performed by a controller 23 as illustrated in FIG. 2.

Such control of the position at which the visual representations of a scene from a plurality of viewpoints 15A-D are rendered on the one or more volumetric displays 13 can be performed in response to gaze tracking inputs. In some examples, one or more image capturing devices may be disposed within the encircled volume 7 and are configured to enable the provision of gaze tracking inputs to the controller 23.

Implementation of the controller 23 may be as controller circuitry. The controller 23 may be implemented in hardware alone, have certain aspects in software including firmware alone or can be a combination of hardware and software (including firmware).

As illustrated in FIG. 2 the controller 23 may be implemented using instructions that enable hardware functionality, for example, by using executable instructions of a computer program 29 in a general-purpose or special-purpose processor 25 that may be stored on a computer readable storage medium (disk, memory etc.) to be executed by such a processor 25.

The processor 25 is configured to read from and write to the memory 27. The processor 25 may also comprise an output interface via which data and/or commands are output by the processor 25 and an input interface via which data and/or commands are input to the processor 25.

The memory 27 stores a computer program 29 comprising computer program instructions (computer program code) that controls the operation of the one or more volumetric displays 13 when loaded into the processor 25. The computer program instructions, of the computer program 29, provide the logic and routines that enables control of the one or more volumetric displays 13. The processor 25 by reading the memory 27 is able to load and execute the computer program 29.

In some examples, the apparatus 1 therefore additionally comprises: at least one processor 25; and at least one memory 27 including computer program code, the at least one memory 27 and the computer program code configured to, with the at least one processor 25, cause the control of the one or more volumetric displays 13.

The computer program 29 may arrive at the apparatus 1 via any suitable delivery mechanism. The delivery mechanism may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 29. The delivery mechanism may be a signal configured to reliably transfer the computer program 29. The apparatus 1 may comprise means for propagating or transmitting the computer program 29 as a computer data signal to drivers of the one or more volumetric displays 13.

The computer program instructions (computer program code) may be comprised in a computer program, a non-transitory computer readable medium, a computer program product, a machine readable medium. In some but not necessarily all examples, the computer program instructions may be distributed over more than one computer program.

Although the memory 27 is illustrated as a single component/circuitry it may be implemented as one or more separate components/circuitry some or all of which may be integrated/removable and/or may provide permanent/semi-permanent/ dynamic/cached storage.

Although the processor 25 is illustrated as a single component/circuitry it may be implemented as one or more separate components/circuitry some or all of which may be integrated/removable. The processor 25 may be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

FIG. 3 illustrates an example of an apparatus 1 wherein the one or more volumetric displays 13 are formed by a stack 19 of two-dimensional displays 17. In some examples the two-dimensional displays 17 in the stack 19 are distributed along an axis which enables the projection of light from each of the two-dimensional displays 17 onto at least one optical deflector 3. The axis can intersect the optical deflector 3. The axis may be orthogonal to the two-dimensional displays 17 which are aligned along it. In some examples the axis may instead intersect with intervening optical elements (not shown), such as one or more lenses, which produces a virtual image of the two-dimensional displays 17 aligned upon an axis which intersects with the optical deflector 3.

In some examples the two-dimensional displays 17 are not wholly opaque and may be transparent or substantially transparent. The two-dimensional displays 17 may be at least partially transmissive to light which illuminates their rear. For example, the two-dimensional displays 17 can comprise transparent OLED screens. Alternatively, the two-dimensional displays 17 can comprise transparent LED screens or transparent LCD screens provided with a backlight.

In some examples the visual representation of a scene from respective viewpoints 15A-D is composed of a plurality of layers 21A-G at different depths. Each of the layers 21A-G is displayed on a separate two-dimensional display 17 in the stack 19. The layers 21A-G are displayed on the two-dimensional displays 17 which correspond to their respective depths within the scene. Therefore, layers comprising foreground elements of the scene will be displayed upon two-dimensional displays 17 in the stack 19 which are closer or closest to the optical deflector 3. Layers comprising background elements of the scene will be displayed on two-dimensional displays 17 in the stack which are further or furthest from the optical deflector 3. Deflection by the optical deflectors 3 of light from each of the two-dimensional displays 17 in the stack 19 causes each layer 21A-G to be rendered as a virtual image at an optical depth dependent on the position of the two-dimensional display 17 in the stack 19.

In some examples the layers 21A-G of a single viewpoint are rendered upon the two-dimensional displays 17 of the stack 19 to, in combination, create a three-dimensional image to the unaided human eye when viewed along an axis on which the layers 21A-G are aligned. The layers 21A-G of a single viewpoint can also be rendered so as to, in combination, create a three-dimensional image to the unaided human eye when viewed at an angle to this axis that is within a threshold angle. In some examples, if the layers 21A-G are viewed at an angle to this axis which is greater than the threshold angle, it can become clear to the observer that the scene has been sliced into two-dimensional layers to create the illusion of depth.

When light from the stack 19 is deflected by an optical deflector 3, an observer can see a virtual image of this stack 19 within the volume 7. If this virtual image of the stack 19 is viewed at an angle which exceeds the threshold angle to the axis along which the layers 21A-G of this virtual stack appear to be aligned, it can become clear to the observer that the scene has been sliced into two-dimensional layers to create the illusion of depth. However, by means of the arrangement of the optical deflectors 3, the angle to this axis at which the stack 19 is viewed as a primary viewpoint is limited to one half of the angular interval between adjacent optical deflectors 3. In the example of FIG. 3 where the adjacent optical deflectors 3 are separated by an interval of 90 degrees, the virtual image of the stack 19 can be viewed at 45 degrees either side of the apparent axis of the virtual stack before another stack 19 takes over in providing the primary viewpoint to the observer.

Therefore, the angular interval between adjacent optical deflectors 3 and the threshold viewing angle of the layers 21A-G of the stack 19 can be correspondingly adapted to ensure that separation of the layers 21A-G is not visually apparent to the observer whilst providing the primary viewpoint of the observer. If the angular interval between adjacent optical deflectors 3 is reduced the threshold viewing angle of the layers 21A-G of the stack 19 can also be reduced. This reduces restrictions upon the formation of the stack 19.

In view of the foregoing it is apparent that reducing the angular interval between optical deflectors 3 enables the rendering of layers 21A-G in a manner that has a smaller threshold viewing angle. For example, less layers may be rendered, thus reducing the number of required two-dimensional displays 17, or there may be greater depth between layers. Additionally, reducing the angular interval between optical deflectors 3 enables more optical deflectors 3 to be arranged around a volume 7, thus providing more viewpoints. In one example the apparatus 1 illustrated in FIG. 3 may be adapted so that instead of four optical deflectors 3 being arranged at an interval of 90 degrees around a volume 7, six optical deflectors 3 can be arranged at intervals of 60 degrees around the volume 7 or eight optical deflectors 3 can be arranged at intervals of 45 degrees around the volume 7.

Where the arrangement of optical deflectors 3 as illustrated in FIGS 1 and 3 is adapted such that the optical deflectors 3 are arranged at intervals of less than 90 degrees around the volume 7, light originating from a single stack 19 or any other form of volumetric display 13 may be incident upon and thus deflected by more than one optical deflector 3. As a result, a single optical deflector 3 may deflect light originating from two or more volumetric displays 13, each of which project a visual representation of a scene from a different viewpoint. As a result, virtual images of the scene from multiple viewpoints are formed by the single optical deflector 3. Since the virtual images are spaced from one another, whether an observer sees the scene from multiple viewpoints at the same time may be dependent on the angle and distance from which the observer looks at the optical deflector 3. However, with such an arrangement, there are at least some positions in which the observer viewing the scene through the single optical deflector 3 may see the scene from multiple viewpoints at the same time. Since an observer expects to view only one viewpoint at a time, this can result in a confusing image of the scene being presented to an observer.

To prevent a single optical deflector 3 from being illuminated by light emitted from two or more volumetric displays 13, the projected image field of the volumetric display 13 can be restricted to a limited solid angle. This limited solid angle is subtended by the optical deflector 3 which is aligned with the projection axis of the volumetric display 13 but not subtended by any portion of neighbouring optical deflectors 3. This can be achieved by any suitable means. For example, this may be achieved by upstanding opaque barriers disposed between each volumetric display 13. In some examples the upstanding opaque barriers may be provided by walls of a housing within which the volumetric displays 13 may be recessed. The walls of the housing may also prevent the volumetric displays from being directly viewed by an observer viewing the apparatus 1 at an ordinary viewing distance.

In other examples opaque barriers extending between optical deflectors 3 can be used to prevent illumination of the optical deflectors by light emitted from volumetric displays 13 associated with neighbouring optical deflectors 3.

In other examples the shapes of the optical deflectors 3 can be selected so that there is no portion of the optical deflector 3 at a position which could be illuminated by light emitted from volumetric displays 13 associated with neighbouring optical deflectors 3. In some examples convex polygons with five or more sides and ovoids may be suitable shapes for this purpose because they may be wider at mid-height than at the top or bottom. Such shapes therefore have less area in positions where light emitted from volumetric displays 13 associated with neighbouring optical deflectors 3 would be incident. In some examples, hexagonal shaped optical deflectors 3 may be used.

In still other examples visual representations of a scene can be rendered in a position on a volumetric display 13, or volumetric displays 13 can be positioned, in such a manner that the incident angle with which neighbouring optical deflectors 3 are illuminated is sufficiently large that the deflected light 11 is not seen by an observer viewing the neighbouring optical deflectors 3 as primary viewpoints from an ordinary viewing distance.

Although in the example of FIG. 3, the stack 19 of two-dimensional displays 17 comprised in a volumetric display 13 is only used to render a single viewpoint, it is to be appreciated that one or more stacks of larger two-dimensional displays could be used which render multiple viewpoints per stack. It is to be appreciated that the aforementioned means for preventing illumination of a single optical deflector 3 by two or more volumetric displays 13 could be implemented to prevent illumination of a single optical deflector 3 with two or more visual representations of a scene from different viewpoints where the two or more visual representations may be rendered by the same volumetric display 13.

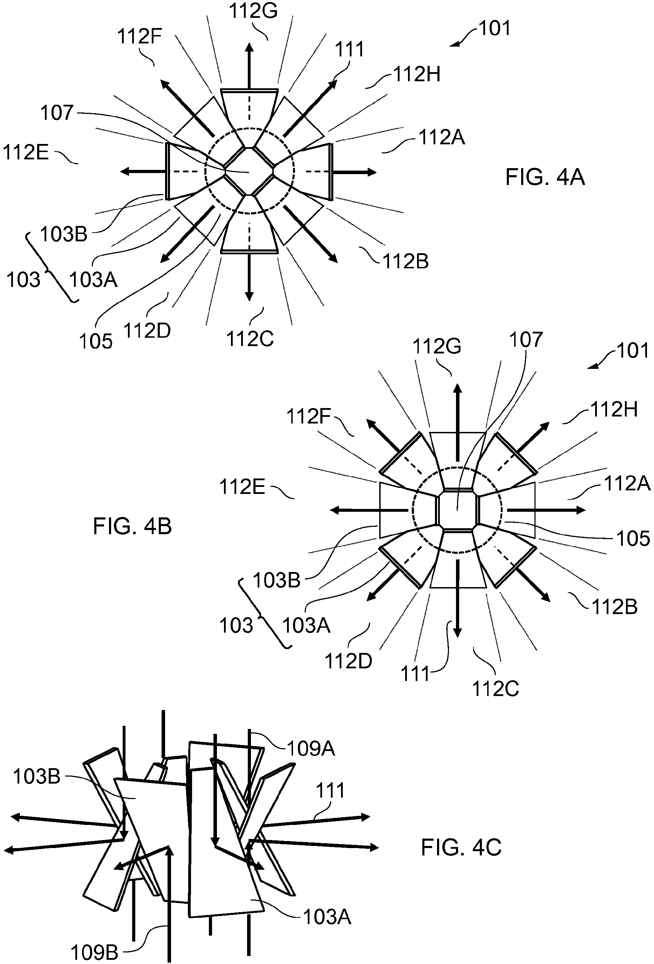

FIGS. 4A to C illustrate an example of an apparatus 101 which provides a further option for preventing illumination of a single optical deflector by two or more volumetric displays, or with two or more visual representations of a scene from different viewpoints, whilst providing viewpoints at angular intervals of less than 90 degrees. The apparatus 101 can be used as an addition or alternative to the aforementioned solutions to this problem.

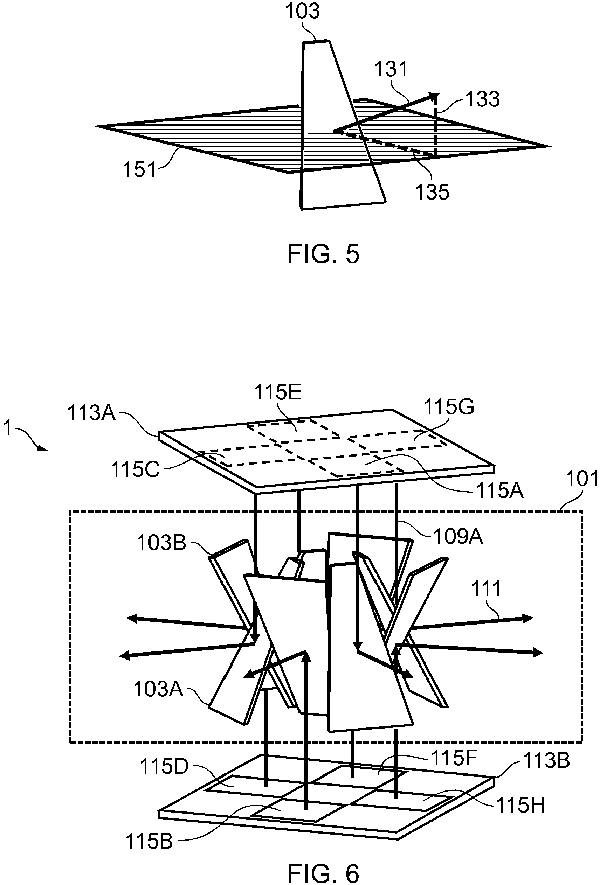

The apparatus 101 comprises an arrangement of a plurality of optical deflectors 103. Examples of the apparatus 101 are illustrated from different perspectives in FIGS. 4A to C and are described in relation to FIG. 5.

FIG. 4 illustrates a top-down two-dimensional representation of the apparatus 101. FIG. 4B illustrates a bottom-up two-dimensional representation of the apparatus 101. FIG. 4C illustrates a three-dimensional representation of the apparatus 101. FIG. 5 illustrates a single optical deflector 103 amongst the plurality of optical deflectors 103 as comprised in the apparatus 101 in order to aid explanation of the optical deflectors 103 and their arrangement in the apparatus 101.

An optical deflector 103 is an optical element which has the function of deflecting incident light 109A, B from one direction into another direction. The deflected light 111 is projected into a different direction to the incident light 109A, B by the optical deflector 103. These optical elements can have reflective, refractive, and/or diffractive optical properties. The deflection of the incident light 109A, B can be by reflection, refraction, and/or diffraction. Examples of such optical deflectors 103 comprise, for example, reflective glass planes, mirrors, or holographic mirrors.

The apparatus 101 comprises a plurality of optical deflectors 103 which are arranged about a curve 105 which at least partially encircles a volume 107. It is to be understood that in some examples the plurality of optical deflectors 103 may not be arranged on the curve 105 but may instead be distributed about the curve, generally following the curve 105 but positioned above or below the curve 105.

The optical deflectors 103 are configured to at least partially deflect incident light 109A, B away from the volume 107.

The optical deflectors 103 of the apparatus 101 have respective optical axes 131 (as illustrated in FIG.5) which extend outwardly from the volume 107. The optical axes 131 have a component 133 orthogonal to a plane 151 of the curve 105 and a component 135 parallel to the plane 151. It is to be understood that in some examples the curve 105 may not be a plane curve and in such examples the plane 151 of the curve 105 refers to a plane of best fit of the curve 105 such as, for example, a least squares plane.

The optical axis 131 of an optical deflector 103 is an axis about which there is some degree of symmetry in the optical behaviour of the optical deflector 103.

Nearest neighbouring optical deflectors 103 have respective optical axes 131 with differently directed orthogonal components 133 and with an angular separation between parallel components 135 of less than 90 degrees.

For the avoidance of doubt nearest neighbouring optical deflectors 103 refers to a pair of optical deflectors 103 comprising one optical deflector 103 and the closest or next optical deflector 103 in the encircling direction of the curve 105.

In some examples the closest or next optical deflector 103 can be an adjacent optical deflector 103 or alternatively it may be separated by intervening components.

In some examples an intervening component may comprise an opaque barrier for blocking light which would have an angle of incidence on the optical deflector 103 which exceeds a desired threshold angle. For example, the opaque barrier can be arranged to block light which would have an angle of incidence on the optical deflector 103 which is consistent with having been emitted by a source intended to at least primarily illuminate a neighbouring optical deflector 103.

In some examples the curve 105 can be a plane curve. In some examples the curve 105 can be simple curve. A simple curve does not cross itself and has no missing points. In some examples the curve 105 forms a closed loop which encircles the volume 107. In other examples the curve may only encircle part of the volume 107. The curve 105 can subtend an angle of less than 360 degrees such as, for example, 180 degrees.

In some examples a portion of each of the plurality of optical deflectors 103 lies on the curve 105. However, it is to be understood that the optical deflectors may not have any portion that lies on the curve 105 and may be, in their entirety, positioned above or below the curve 105. In some examples the orthogonal displacement from the curve 105 of the centres of the plurality of optical deflectors 103 sum to zero. Orthogonal displacement from the curve 105 is determined with respect to the plane 151 of the curve 105.

In some examples a portion of each of the plurality of optical deflectors 103 lies in the plane 151 of the curve 105. In some examples the orthogonal displacement from the curve 105 of the centres of the plurality of optical deflectors 103 sum to zero. Orthogonal displacement from the curve 105 is determined with respect to the plane 151 of the curve 105.

In some examples the plurality of optical deflectors 103 are configured to deflect incident light 109A, B into different respective fields of projection 112A-H. Each optical deflector 103 is responsible for an image field associated with a particular viewpoint.

In some examples, and as can be seen particularly in FIG. 4C, the plurality of optical deflectors 103 can comprise one or more first optical deflectors 103A and one or more second optical deflectors 103B.

The one or more first optical deflectors 103A are configured to reflect incident light 109A from a first direction, orthogonal to the plane 151, into a radial or substantially radial direction.

The one or more second optical deflectors 103B are configured to reflect incident light from a second direction 109B, opposite to the first direction, into a radial or substantially radial direction.

Reference to a radial direction is to be understood with reference to the encircled volume 105. In some examples the radial direction refers to a direction which is parallel to the plane 151. It is to be understood that each of the optical deflectors 103A, B deflect incident light 109A, B into different radial directions.

Deflected light 111 propagating in a substantially radial direction has a magnitude of its component in a radial direction which is larger than magnitudes of its components, if any, orthogonal to the radial direction, either individually or as a sum. In some examples a substantially radial direction refers to directions which are within a bearing of 20 degrees to the radial direction. A substantially radial direction may also refer to directions which are within bearings other than 20 degrees to the radial direction, such as, for example, within a bearing of 15 degrees, 10 degrees, or 5 degrees to the radial direction.

In some examples the optical axes of first optical deflectors 103A are oriented at between +22.5 degrees and +67.5 degrees relative to the plane 151. For example, the optical axes of first optical deflectors 103A may be oriented at +45 degrees relative to the plane 151. In some examples the optical axes of second optical deflectors 103B are oriented at between -22.5 degrees and -67.5 degrees to the plane 151. For example, the optical axes of second optical deflectors 103B may be oriented at -45 degrees relative to the plane 151.

If it is desired that the scene can be viewed from multiple viewpoints at a consistent eye level as an observer moves around the volume 107, the optical deflectors 103A, B may be arranged so that components of the deflected light 111 orthogonal to the plane 151 are equal at each viewpoint. In some examples the first optical deflectors 103A are oriented at (X + 45) degrees to the plane 151 and the second optical deflectors 103B are oriented at (X - 45) degrees to the plane 151, where X degrees is the desired bearing from the radial direction into which the incident light 109A, B is configured to be deflected by the first and second optical deflectors 103A, B.

In some examples the first and second optical deflectors 103A, B are distributed in an alternating arrangement around the volume 107 in the encircling direction of the curve 105. In some examples the plurality of optical deflectors 103 and the apparatus 101 at least partially encircle a cylindrical volume and are regularly spaced every 45 degrees about the surface of the cylindrical volume. In other words, the optical deflectors 103 have an angular interval of 45 degrees. In some examples the plurality of optical deflectors 103 comprise a plurality of planar reflectors with respective surface normals which are parallel to the respective optical axes 131 of the optical deflectors 103.

In the example illustrated in FIGS 4A to C, the optical deflectors 103 have a trapezoidal shape. In other examples, the optical deflectors 103 can be triangular, rectangular, hexagonal, or ovoidal amongst other shapes. In some examples the plurality of optical deflectors 103 may comprise optical deflectors 103 of more than one shape.

In some examples the size of the optical deflectors 103 is selected to enable the full extent of the visual representation of a scene from a viewpoint to be visible to an observer when looking from infinity along the apparent projection axis of the virtual image of the volumetric display 113. The size of the optical deflectors 103 may also be selected to enable the largest virtual image of the visual representation of a scene from a viewpoint to be visible to an observer.

Therefore, to satisfy these conditions in examples where respective visual representations of a scene have a height H and width W, the optical deflectors 103 are sized with a height of:

$$\frac{1}{\cos \alpha} H,$$

where $\alpha$ is the angle at which the optical deflector 103 is inclined relative to the one or more volumetric displays 113. This ensures that the full height of the scene can be seen by an observer.

In order to most efficiently encircle the volume, the optical deflectors 103 may be sized so that a continuous line, at least partially encircling the volume 107, is formed from their midsegments. For example, the one or more first optical deflectors 103A may come into contact with the one or more second optical deflectors 103B at the midpoint of each of their respective lateral sides.

Therefore, to satisfy these conditions in examples where respective visual representations of a scene have a height H and width W, the optical deflectors 103 may be sized to have a midsegment of length:

$$\frac{1 - \cos 2\beta}{2 \sin \beta} H,$$

where $\beta$ is angular separation between parallel components 135 of the optical axes 131 of nearest neighbouring optical deflectors 103. To ensure that the full width of the scene can be seen by an observer the length of the midsegment of the optical deflectors 103 may be greater than W.

To avoid overlapping at the upper edges of the first optical deflectors 103A, the first optical deflectors 103A may be sized to have a width of no more than W at their upper edges. To avoid overlapping at the lower edges of the second optical deflectors 103B, the second optical deflectors 103B may be sized to have a width of no more than W at their lower edges.

The one or more volumetric displays 113 may be displaced from respective optical deflectors 103 by a distance of half W to ensure that the virtual images of the visual representations of the scene from different viewpoints are co-located in space at a position within the volume 107.

In an example where α equals 45 degrees and β equals 45 degrees, the optical deflectors 103 may be sized to have a length of $H\sqrt{2}$ and a width at their midpoint of $H/\sqrt{2}.$

FIG. 6 illustrates an example of the apparatus 1 wherein the plurality of optical deflectors are arranged in accordance with the apparatus 101. In this example the apparatus 1 comprises a plurality of optical deflectors 103 arranged about a curve 105 which at least partially encircles a volume 107, the optical deflectors 103 configured to at least partially reflect incident light 109A, B away from the volume 107. The optical deflectors 103 have respective optical axes 131 which extend outwardly from the volume 107, the optical axes 131 having a component 133 orthogonal to a plane 151 of the curve 105 and a component 135 parallel to the plane 151. Nearest neighbouring optical deflectors 103 have respective optical axes 131 with differently directed orthogonal components 133 and an angular separation between parallel components 135 of less than 90 degrees. The apparatus 1 further comprises one or more volumetric displays 113 configured to illuminate the respective optical deflectors with a visual representation of a scene from respective viewpoints 115A-H.

In some examples the apparatus 1 comprises two or more volumetric displays 113A, B configured to illuminate the respective optical deflectors with a visual representation of a scene from respective viewpoints 115A-H.

In some examples the two or more volumetric displays 113A, B comprise at least one first volumetric display 113A configured to illuminate one or more of the first optical deflectors 103A by projecting light into the first direction 109A.

In some examples the two or more volumetric displays 113A, B further comprise at least one second volumetric display 113B configured to illuminate one or more of the second optical deflectors 103B by projecting light into the second direction 109B.

In some examples the apparatus 101 comprises pairs of first optical deflectors 103A which oppose each other across the encircled volume 107 and pairs of second optical deflectors 103B which oppose each other across the encircled volume 107. In examples where the optical deflectors 103A, B are not opaque, unwanted virtual images may be formed.

Viewed from one perspective, one of a pair of first optical deflectors 103A deflects incident light 109A from the first one or more volumetric displays 113A to form a virtual image within the volume 107 of a visual representation of a scene from a first viewpoint. Viewed from the same perspective, the other first optical deflector 103A of the pair may deflect incident light 109B from the second one or more volumetric displays 113B. In particular the other first optical deflector 103A of the pair may form a virtual image behind the volume 107 of one or more visual representations of the scene from viewpoints adjacent to the first viewpoint.

Likewise, viewed from another perspective, one of a pair of second optical deflectors 103B deflects incident light 109B from the second one or more volumetric displays 113B to form a virtual image within the volume 107 of a visual representation of a scene from a second viewpoint. Viewed from the same perspective, the other second optical deflector 103B of the pair may deflect incident light 109A from the first one or more volumetric displays 113A. In particular the other second optical deflector 103B of the pair may form a virtual image behind the volume 107 of one or more visual representations of the scene from viewpoints adjacent to the second viewpoint.

To prevent the formation of these unwanted virtual images behind the volume 107, in some examples opaque optical deflectors 103A, B may be used. In other examples the curve 105 about which the optical deflectors 103A, B are arranged may subtend an angle of 180 degrees or less.

Although not shown, it is to be appreciated that in some examples a single volumetric display 113 could be used to render visual representations of a scene from each viewpoint 115A-H. Optical elements may be provided to direct light emitted by the single volumetric display 113 towards one or more of the first optical deflectors 103A and towards one or more of the second optical deflectors 103B.

Although the apparatus 1 has been described as comprising one or more volumetric displays 113 which are configured to illuminate the optical deflectors 103 of the apparatus 101, it is to be appreciated that the apparatus 101 can be used in apparatus, similar to that illustrated in FIG. 6, which do not comprise volumetric displays. For example, the volumetric displays can be replaced by ordinary two-dimensional displays which may or may not be configured to render three-dimensional images. These may, for example, comprise OLED screens, LCD screens, LED screens, etc. Alternatively, the volumetric displays may be replaced by other displays capable of rendering three-dimensional images such as autostereoscopic displays or automultiscopic or holographic displays or parallax displays such as, for example lenticular-sheet displays, or panoramagrams.

The above described examples of the apparatus 1 can find application in video-conferencing systems. The apparatus 1 may therefore also comprise image and audio capturing and output devices including, for example, speakers, cameras, and microphones. The microphones and speakers may be configured for recording and rendering spatial audio signals.

Where a structural feature has been described, it may be replaced by means for performing one or more of the functions of the structural feature whether that function or those functions are explicitly or implicitly described.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one" or by using "consisting".

In this description, reference has been made to various examples. The description of features or functions in relation to an example indicates that those features or functions are present in that example. The use of the term "example" or "for example" or "can" or "may" in the text denotes, whether explicitly stated or not, that such features or functions are present in at least the described example, whether described as an example or not, and that they can be, but are not necessarily, present in some of or all other examples. Thus "example", "for example", "can" or "may" refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain embodiments, those features may also be present in other embodiments whether described or not.

The term "a" or "the" is used in this document with an inclusive not an exclusive meaning. That is any reference to X comprising a/the Y indicates that X may comprise only one Y or may comprise more than one Y unless the context clearly indicates the contrary. If it is intended to use "a" or "the" with an exclusive meaning then it will be made clear in the context. In some circumstances the use of "at least one" or "one or more" may be used to emphasis an inclusive meaning but the absence of these terms should not be taken to infer and exclusive meaning.

The presence of a feature (or combination of features) in a claim is a reference to that feature) or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

I/we claim:

**Claims**

1. An apparatus comprising:

   a plurality of optical deflectors arranged about a curve which at least partially encircles a volume, the optical deflectors configured to at least partially deflect incident light away from the volume, wherein the optical deflectors have respective optical axes which extend outwardly from the volume, the optical axes having a component orthogonal to a plane of the curve and a component parallel to the plane, and wherein nearest neighbouring optical deflectors have respective optical axes with differently directed orthogonal components and with an angular separation between parallel components of less than 90 degrees.

2. An apparatus as claimed in claim 1 wherein nearest neighbouring optical deflectors comprise a pair of optical deflectors comprising one optical deflector and the closest or next optical deflector in the encircling direction of the curve.

3. An apparatus as claimed in claim 1 or claim 2 wherein the curve is a plane, simple curve.

4. An apparatus as claimed in any preceding claim wherein the curve forms a closed loop encircling the volume.

5. An apparatus as claimed in any preceding claim wherein a portion of each of the plurality of optical deflectors lies in the plane.

6. An apparatus as claimed in any preceding claim wherein the orthogonal displacement from the curve of the centres of the plurality of optical deflectors sum to zero.

7. An apparatus as claimed in any preceding claim wherein the plurality of optical deflectors are configured to deflect incident light into different respective fields of projection.

8. An apparatus as claimed in any preceding claim wherein the plurality of optical deflectors comprise one or more first optical deflectors and one or more second optical deflectors,
wherein the one or more first optical deflectors configured to deflect incident light from a first direction, orthogonal to the plane, into a substantially radial direction, and
wherein the one or more second optical deflectors configured to deflect incident light from a second direction, opposite to the first direction, into a substantially radial direction.

9. An apparatus as claimed in claim 8 wherein the first and second optical deflectors are distributed, in an alternating arrangement, around the volume in the encircling direction of the curve.

10. An apparatus comprising:

a plurality of optical deflectors arranged about a curve which at least partially encircles a volume, the optical deflectors configured to at least partially deflect incident light away from the volume; and
one or more volumetric displays configured to illuminate respective optical deflectors with a visual representation of a scene from respective viewpoints.

11. An apparatus as claimed in claim 10 wherein the one or more volumetric displays are formed by a stack of two-dimensional displays.

12. An apparatus as claimed in claim 11 wherein the two-dimensional displays in the stack are distributed along an axis which intersects a first one of the optical deflectors or which enables projection of light from each two-dimensional display onto at least the first one of the optical deflectors.

13. An apparatus as claimed in claim 11 or claim 12 wherein the two-dimensional displays are at least partially transmissive to light which illuminates their rear.

14. An apparatus as claimed in any of claims 11 to 13 wherein the visual representation of a scene from respective viewpoints is composed of a plurality of layers at different depths, the layers being displayed on the two-dimensional displays which correspond to their respective depths.

15. An apparatus as claimed in any of claims 10 to 14 wherein the optical deflectors have respective optical axes which extend outwardly from the volume, the optical axes having a component orthogonal to a plane of the curve and a component parallel to the plane, and
wherein nearest neighbouring optical deflectors have respective optical axes with differently directed orthogonal components and with an angular separation between parallel components of less than 90 degrees.

FIG. 1

FIG. 2

FIG. 3

112G

112F

111

112H

107

112E

112A

FIG. 4A

103B

112B

103

103A

105 112D

112C

112G

107

101

112F

112H

FIG. 4B

112E

112A

105

103B

112B

103

103A

111

112D

112C

109A

103B

111

FIG. 4C

103A

109B

FIG. 5

FIG. 6

Europäisches
Patentamt

European
Patent Office

Office européen
des brevets

# EUROPEAN SEARCH REPORT

Application Number

EP 18 19 6704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Orbital Mirror (Clear) - 850029 - Wall Mirrors by Zuo Modern Contemporary ¦ Modern Furniture Canada", 6 May 2016 (2016-05-06), XP055571558, Retrieved from the Internet: URL:https://web.archive.org/web/20160506120330/https://www.modernfurniturecanada.ca/orbital-mirror-clear-p-17350.html [retrieved on 2019-03-20] | 1-9 | INV. G02B27/22 H04N13/302 G03B21/28 H04N13/388 |
| A | * product "Orbital Mirror (Clear)" * | 10-15 | |
| X,P | -& Anonymous: "850029 - Orbital Mirror", 20 March 2019 (2019-03-20), XP055571559, Retrieved from the Internet: URL:https://zuomod.com/decor-wall-decor/decor-wall-decor-mirrors/orbital-mirror [retrieved on 2019-03-20] | 1-9 | |
| A,P | * product image; product description * | 10-15 | |
| X | CN 103 969 838 A (UNIV TSINGHUA) 6 August 2014 (2014-08-06) | 10-14 | TECHNICAL FIELDS SEARCHED (IPC) |
| A | * paragraphs [0038] - [0044]; figures 2-5 * | 1-9,15 | G02B H04N G03D G03B |
| X | GUOWEN CHEN ET AL: "Crosstalk-free 360-Degree Viewable 3D Display based on Pyramidal Mirrors and Diaphragms", DIGITAL HOLOGRAPHY & 3-D IMAGING MEETING, 1 January 2015 (2015-01-01), page DW3A.7, XP055570301, Washington, D.C. DOI: 10.1364/DH.2015.DW3A.7 ISBN: 978-1-55752-991-6 | 10-14 | |
| A | * section "3. Simulations and experiments"; figures 1(a), 2(a)-(b), 4(a)-(c) * | 1-9,15 | |

-/--

The present search report has been drawn up for all claims

| Place of search | Date of completion of the search | Examiner |
|---|---|---|
| Munich | 25 March 2019 | Kaiser, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 18 19 6704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO DONG ET AL: "Floating autostereoscopic 3D display with multidimensional images for telesurgical visualization", INTERNATIONAL JOURNAL OF COMPUTER ASSISTED RADIOLOGY AND SURGERY, SPRINGER, DE, vol. 11, no. 2, 26 September 2015 (2015-09-26), pages 207-215, XP035942068, ISSN: 1861-6410, DOI: 10.1007/S11548-015-1289-8 [retrieved on 2015-09-26] | 10-14 | |
| A | * section "Experiments and results"; figures 2(a)-(b), 7(a)-(b) *<br>----- | 1-9,15 | |
| A | JASON GENG: "Three-dimensional display technologies", ADVANCES IN OPTICS AND PHOTONICS, vol. 5, no. 4, 22 November 2013 (2013-11-22), pages 456-535, XP055205716, DOI: 10.1364/AOP.5.000456<br>* page 502 - page 503 *<br>----- | 1-15 | TECHNICAL FIELDS SEARCHED (IPC) |

The present search report has been drawn up for all claims

| Place of search | Date of completion of the search | Examiner |
|---|---|---|
| Munich | 25 March 2019 | Kaiser, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 6704

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2019

| Patent document cited in search report | Publication date | Patent family member(s) | Publication date |
|---|---|---|---|
| CN 103969838 A | 06-08-2014 | NONE | |

EPO FORM P0459

For more details about this annex : see Official Journal of the European Patent Office, No. 12/82